# EUROPÄISCHE PATENTSCHRIFT

(11) **EP 3 231 333 B1**
(45) Veröffentlichungstag und Bekanntmachung des Hinweises auf die Patenterteilung: **13.03.2019**
(21) Anmeldenummer: 17150304.8
(22) Anmeldetag: 04.01.2017
(51) Int. Cl.: A47G 23/16

(54) **GEFÄSS MIT EINER EINRICHTUNG ZUM EINSTELLEN UND ANZEIGEN EINES ANZEIGEWERTS**
CONTAINER WITH A DEVICE FOR CONFIGURING AND INDICATING A DISPLAY VALUE
RÉCIPIENT COMPRENANT UN DISPOSITIF D'AFFICHAGE ET DE RÉGLAGE D'UNE VALEUR

(30) Priorität: 13.04.2016 DE 102016004502
(43) Veröffentlichungstag der Anmeldung: 18.10.2017
(73) Patentinhaber: Bucksch, Helmut, 65812 Bad Soden/Ts. (DE)
(72) Erfinder: Bucksch, Helmut, 65812 Bad Soden/Ts. (DE)
(74) Vertreter: Metten, Karl-Heinz

(56) Entgegenhaltungen:
- EP-A2- 1 835 268
- CN-U- 202 269 813
- DE-B3- 10 323 996
- DE-U1- 8 709 919
- DE-U1-202008 013 599
- DE-U1-202012 001 463

## Beschreibung

Die Erfindung betrifft ein Gefäß, insbesondere Trinkgefäß, mit einer Einrichtung zum Einstellen und Anzeigen eines Anzeigewertes. Die Erfindung betrifft ferner ein Verfahren zum Einstellen und Anzeigen eines Anzeigewertes auf einem solchen Gefäß.
Aus der DE 103 23 996 B3 ist ein derartiges gattungsgemäßes Trinkgefäß bekannt. Das Trinkgefäß weist eine Füllmengenskala auf, an der die ins Trinkgefäß eingefüllte Füllmenge abgelesen werden kann. Das Trinkgefäß weist ferner ein Skalenelement auf, das mit einer Gesamttrinkmengenskala versehen ist. Das Skalenelement weist ein Metall- oder Magnetband oder eine Metall- oder Magnetfolie auf, das bzw. die auf dem Trinkgefäß aufgeklebt ist. Ein Markierungselement besteht aus magnetischem Material oder aus einem Magneten und ist längs der Gesamttrinkmengenskala verschiebbar.
Die EP 1 835 268 A2 beschreibt ein Flüssigkeitsmessgefäß, mit einer entfernbaren Klammer, wobei die Klammer zwei Marker umfasst, die magnetisch verbunden sind.
Die DE 103 23 996 B3 offenbart ein Gefäß mit einer Einrichtung zur Anzeige einer Gesamtfüllmenge, die größer sein kann als das Fassungsvermögen des Gefäßes. Besagte Einrichtung weist ein Skalenelement mit einer Gesamtfüllmengenskala und ein Markierungselement auf, wobei das Skalenelement und das Markierungselement vom Gefäß abnehmbar und relativ zueinander einstellbar sind, und das Skalenelement und das Markierungselement durch Magnetkraft miteinander lösbar verbunden sind.

Die DE 20 2012 001463 U1 beschreibt ein Band zur Markierung von Behältnissen wie Krügen und Flaschen mit der Möglichkeit die konsumierte Menge zu zählen und anzuzeigen, wobei eine Skala mit Zähler (Schieber oder Magnet) auf einem länglichen Band zwischen 10 und 20 cm liegt, welches an einem Henkel oder Flaschenhals befestigt werden kann und es somit ermöglicht die konsumierte Menge darzustellen und abzulesen.
Das bekannte Trinkgefäß hat den Nachteil, dass das Markierungselement unbeabsichtigt verstellt werden kann. Die jeweils eingestellte Trinkmenge kann von z. B. an Demenz erkrankten Personen - bei denen besonders auf ausreichende Flüssigkeitszufuhr geachtet werden muss - unbeabsichtigt verstellt werden, so dass eine sichere Trinkmengenkontrolle unmöglich ist. Daher kann dieses Trinkgefäß nicht die schriftlichen Trinkprotokolle ersetzen, die beispielsweise in Altenheimen geführt werden müssen.
Es ist die Aufgabe der vorliegenden Erfindung, eine Einrichtung zum Einstellen und Anzeigen eines Anzeigewerts sowie ein Gefäß mit einer derartigen Einrichtung anzugeben, die bzw. das nicht mehr mit den Nachteilen des Stands der Technik behaftet ist. Insbesondere ist es eine Aufgabe der vorliegenden Erfindung, ein Gefäß mit einer Einrichtung zum Einstellen und Anzeigen eines Anzeigewerts anzugeben, bei der der eingestellte Anzeigewert nicht unbeabsichtigt oder unautorisiert verstellt werden kann. Ferner ist es insbesondere auch die Aufgabe der vorliegenden Erfindung, ein Verfahren zum Einstellen und Anzeigen eines Anzeigewerts bereitzustellen, bei dem der eingestellte Anzeigewert nicht unbeabsichtigt oder unautorisiert verstellt werden kann.
Die der Erfindung zugrunde liegende Aufgabe wird gelöst durch ein Gefäß, insbesondere Trinkgefäß, mit einer Einrichtung zum Einstellen und Anzeigen eines Anzeigewertes, umfassend mindestens eine Gefäßwandung mit einer Innenseite und einer Außenseite, einen Gefäßboden und eine, insbesondere gegenüberliegende, Gefäßöffnung sowie ein Metall- oder Magnetelement und ein Markierungselement, wobei das Metall- oder Magnetelement magnetisches Material und/oder metallisches Material umfasst und sich vorzugsweise entlang einer Gefäßwandung erstreckt, wobei das Markierungselement in und/oder unter einem Gehäuse gelagert und durch einen, insbesondere separaten, Stellmagneten, vorzugsweise kontaktlos mittels Magnetkraft, verschiebbar ist, wobei das Metall- oder Magnetelement ein Metall- oder Magnetstreifen ist, der eine Gleitfläche aufweist, auf das Markierungselement in dem Gehäuse verschiebbar gelagert ist.

Erfindungsgemäß ist es vorgesehen, dass der Metall- oder Magnetstreifen eine Gleitfläche aufweist, auf welcher bzw. entlang der das Markierungselement in dem Gehäuse verschiebbar gelagert ist. Insbesondere ist es bevorzugt, wenn sich die Gleitfläche entlang der Außenseite der Gefäßwandung aus Richtung des Gefäßbodens in Richtung der Gefäßöffnung erstreckt. Auch ist es bevorzugt, wenn die Gleitfläche im Wesentlichen plan ausgestaltet ist und/oder entlang ihrer Längserstreckung keine Krümmung aufweist. Dabei ist es insbesondere vorgesehen, dass das Markierungselement beim Verschieben mit dem Stellmagneten über die Gleitfläche gleitet und während des Verschiebens den Kontakt zum Metall- oder Magnetstreifen nicht verliert.

Erfindungsgemäß ist das Metall- oder Magnetelement ein Metall- oder Magnetstreifen. Dies hat mehrere Vorteile. Einerseits kann auf einem Metall- oder Magnetstreifen eine besonders gute Gleitfläche bereitgestellt werden, um das erfindungsgemäße Markierungselement verschiebbar zu lagern. Anderseits hat sich gezeigt, dass Metall- oder Magnetstreifen besonders gut an die Krümmung einer Gefäßwand anpassbar sind. In zahlreichen bevorzugten Ausgestaltungen weist das Gefäß gekrümmte Außenwandungen, insbesondere mit einem kreisrunden Querschnitt, auf, wobei es allerdings auch nicht ausgeschlossen ist, dass in einigen anderen Ausgestaltungen die Gefäßwand nicht gekrümmt ist, beispielsweise indem ein rechteckiger Querschnitt des Gefäßes vorliegt.

Als besonders zweckmäßig hat sich erwiesen, wenn der Stellmagnet auf das Markierungselement eine größere Magnetkraft ausübt als das Metall- oder Magnetelement, wenn der Stellmagnet an der Außenseite des Gefäßes entlang dem Gehäuse geführt wird, insbesondere so, dass eine Verschiebung des Markierungselementes mit dem Stellmagneten aufgrund der größeren Magnetkraft besonders effektiv bewirkt werden kann. Im Anwendungsfall kann es vorgesehen sein, dass der Stellmagnet von Pflegekräften verwendet wird, um das Markierungselement zu verschieben. Das Gefäß, welches den pflegebedürftigen Personen zur Verfügung gestellt wird, weist somit ein Markierungselement auf, welches sich nur mit dem Stellmagneten, d.h. nur durch Pflegekräfte, die diesen besitzen, verschieben lässt. Vorzugsweise handelt es sich bei den magnetischen Kräften zwischen dem Markierungselement und dem Metall- oder Magnetelement sowie zwischen dem Markierungselement und dem Stellmagnet jeweils um eine Anziehungskraft. Grundsätzlich haben Experimente aber auch gezeigt, dass das Markierungselement durch einen abstoßenden Stellmagneten ebenfalls verschoben werden kann.

In einer weiteren Ausgestaltung ist mindestens einer der Metall- oder Magnetstreifen um ein Vielfaches länger als er breit ist, insbesondere mindestens doppelt so lang wie breit, vorzugsweise mindestens dreimal so lang wie breit. Auch ist es in einer weiteren Ausgestaltung vorgesehen, dass der Metall- oder Magnetstreifen eine Dicke aufweist, welche geringer ist als die Breite. In einer dieser bevorzugten Ausgestaltungen beträgt die Länge des Metall- oder Magnetstreifens mindestens 2 cm, vorzugsweise mindestens 5 cm, insbesondere bevorzugt 9 bis 14 cm. Die Breite des Metall- oder Magnetstreifen beträgt vorzugsweise weniger als 3 cm, insbesondere weniger als 2,5 cm, insbesondere bevorzugt liegt die Breite in einem Bereich von 0,5 bis 2 cm. Die Dicke des Metall- oder Magnetstreifen beträgt vorzugsweise weniger als 0,5 cm, insbesondere 0,3 cm, und insbesondere bevorzugt liegt sie im Bereich von 0,01 cm bis 0,25 cm.

In einer geeigneten Ausgestaltung beträgt der mittlere Abstand zwischen Gefäßboden und Gefäßöffnung 5 bis 25 cm, vorzugsweise 10 bis 15 cm. Auch ist es dabei bevorzugt, wenn der Bodendurchmesser 3 bis 5 cm beträgt und der Durchmesser der Gefäßöffnung 5 bis 8 cm. Insbesondere bevorzugt sind Ausgestaltungen, bei welchen der Durchmesser vom Gefäßboden kleiner ist als der Durchmesser der Gefäßöffnung.

Vorzugsweise ist es dabei vorgesehen, dass das Markierungselement gleitbar auf dem Metall- oder Magnetelement gelagert ist. Es sei darauf hingewiesen, dass die Gleitbarkeit nicht mit einem gänzlich fehlenden Gleitwiderstand gleichzusetzen ist. Zwischen dem Markierungselement und dem Metall- oder Magnetelement wirken Kräfte, insbesondere magnetische Anziehungskräfte und/oder Reibungskräfte, so dass diese einer Lateralverschiebung entgegenwirken. Erst wenn diese Kräfte durch das Einwirken des Stellmagneten überwunden werden, gleitet das Markierungselement über das Metall- oder Magnetelement.

Ferner ist es besonders bevorzugt, wenn das Markierungselement, ein magnetisches Material, insbesondere einen Magneten, umfasst, wobei das Markierungselement auf einem Metallelement gelagert ist. Obgleich es grundsätzlich möglich ist, ein metallisches oder magnetisches Markierungselement auf einem Magnetelement zu fixieren und zu verschieben, hat es sich als vorteilhaft erwiesen, stattdessen ein magnetisches Markierungselement auf einem Metallelement zu verschieben. In einer geeigneten Ausführungsform kann es sich bei dem Metallelement um einen Metallstreifen handeln, d.h. um einen Metallstreifen, der nicht selber magnetisch, gleichwohl aber magnetisierbar ist. Ein metallisches Material wird im Allgemeinen magnetisierbar genannt, wenn es in einem externen Magnetfeld selbst magnetisiert wird. Diese magnetisierbaren Metalle behalten in der Regel diese Magnetisierung auch noch eine Zeitlang bei, nachdem das externe Magnetfeld entfernt wurde. Besonders bevorzugt ist ein Textilgewebe, welches metallisch oder mit Metall beschichtet ist. Es hat sich gezeigt, dass derartige Metallstreifen flexibler sind und sich besser auf Kunststoffoberflächen fixieren lassen. Ferner kann die Menge an verwendetem Metall reduziert werden. Auch ist ein Metallstreifen umfassend Metallblech geeignet. Vorzugsweise umfasst das Markierungselement einen Neodymmagneten oder einen Samarium-Cobalt-Magneten oder stellt einen solchen dar. Insbesondere bevorzugt ist es, wenn der Magnet mit einer Schutzschicht beschichtet ist, insbesondere mit einer Lackschicht, welche eine Korrosion des Magneten unterbindet.

Vorzugsweise erstrecken sich das Metall- oder Magnetelement und/oder das Gehäuse aus Richtung des Gefäßbodens in Richtung der Gefäßöffnung, insbesondere entlang einer Längserstreckung des Metall- oder Magnetelements und des Gehäuses. Insbesondere ist es bevorzugt, wenn sich Metall- oder Magnetelement und das Gehäuse parallel zueinander entlang der Längserstreckung, insbesondere entlang einer Geraden (d.h. einer Linie ohne Krümmung), erstrecken.

In einer erfindungsgemäßen Ausgestaltung des Gefäßes ist mindestens eine Skala an einer Gefäßwandung, am Metallelement und/ oder am Gehäuse angebracht und erstreckt sich vorzugsweise aus Richtung des Gefäßbodens in Richtung der Gefäßöffnung. Die Skala ist vorzugsweise dazu ausgelegt und eingerichtet, die konsumierte tägliche Gesamttrinkmenge anzuzeigen. Vorzugsweise ist es auch vorgesehen, dass auch die Skala im Wesentlichen parallel zum Metall- oder Magnetelement angeordnet ist. Die Skala kann in einer Ausführungsform in Form von Beschriftungen oder mittels Gravierungen an der Gefäßwandlung angebracht sein. Mit dem vorliegend verwendeten Begriff der Skala soll lediglich das Vorliegen einer Anzeigeeinheit für die Informationswiedergabe zum Ausdruck gebracht werden. Hiermit geht nicht sogleich eine Skalierung einher. Beispielsweise umfasst der Begriff der Skala im vorliegenden Fall unterschiedliche vorgegebene Einstellmöglichkeiten zur Angabe der Mindesttrinkmenge, der Getränkeart, der Trinkmengenbeschränkung und/oder der Art der Erkrankung bzw. dem Grad der Demenz des Benutzers. Mithilfe des Markierungselements kann eine auf der Skala vorliegende spezifische Information für den Nutzer bzw. das Pflegepersonal kenntlich gemacht bzw. eingestellt werden.

Das erfindungsgemäße Gefäß, insbesondere Trinkgefäß, umfasst demgemäß in einer Ausführungsform eine Einrichtung zum Einstellen und Anzeigen eines Anzeigewertes, mindestens eine Gefäßwandung mit einer Innenseite und einer Außenseite, einen Gefäßboden und eine, insbesondere gegenüberliegende, Gefäßöffnung, mindestens ein Metall- oder Magnetelement, mindestens ein Markierungselement, und mindestens ein Gehäuse, wobei das Metallelement magnetisierbares metallisches Material umfasst oder hieraus besteht oder wobei das Magnetelement magnetisches Material umfasst oder hieraus besteht, wobei das mindestens eine Markierungselement magnetisierbares metallisches Material umfasst oder hieraus besteht, wenn als das mindestens eine Metall- oder Magnetelement das Magnetelement umfassend oder bestehend aus magnetischem Material vorliegt, oder wobei das mindestens eine Markierungselement magnetisches Material umfasst oder hieraus besteht, wenn als das mindestens eine Metall- oder Magnetelement das Metallelement umfassend oder bestehend aus magnetisierbarem metallischen Material oder das Magnetelement umfassend oder bestehend aus magnetischem Material vorliegt, so dass das mindestens eine Markierungselement und das mindestens eine Metall- oder Magnetelement eine magnetische Anziehungskraft aufeinander ausüben und das mindestens eine Markierungselement temporär ortsfest auf oder an dem mindestens einen Metall- oder Magnetelement anbringbar ist, wobei das mindestens eine Markierungselement über eine geringere flächige Ausdehnung als das mindestens eine Metall- oder Magnetelement verfügt und entlang dem das mindestens einen Metall- oder Magnetelement verschiebbar ist, und wobei sich das mindestens eine Metall- oder Magnetelement vorzugsweise entlang der mindestens einen Gefäßwandung des Gefäßes erstreckt, wobei das mindestens eine Gehäuse in und/oder an der Gefäßwandung des Gefäßes vorliegt und über eine Erstreckung in und/oder entlang dieser Gefäßwandung, insbesondere von oder beabstandet von dem Gefäßboden in Richtung der oder bis zur Gefäßöffnung, verfügt, und dass das Markierungselement in und/oder unter dem Gehäuse gelagert und durch einen Stellmagneten, vorzugsweise kontaktlos mittels Magnetkraft, entlang dem mindestens einen Metall- oder Magnetelement verschiebbar ist, und dass das Metall- oder Magnetelement ein Metall- oder Magnetstreifen ist, der eine Gleitfläche aufweist, auf welcher das Markierungselement in dem Gehäuse verschiebbar gelagert ist. In einer geeigneten Ausgestaltung hat das Trinkgefäß ein Volumen von weniger als 1 1, insbesondere ein Volumen im Bereich von 100 bis 600 ml, vorzugsweise 200 bis 450 ml. Hierbei kann es vorgesehen sein, dass eine Füllmarke für einen Pegelstand, beispielsweise bei 0,25 1, am Gefäß angebracht ist.
In einer Ausgestaltung wird das Gehäuse durch ein in Richtung der Außenseite der Gefäßwandung offenes Gehäuse in Form einer Abdeckung ausgebildet, wobei das Metall- oder Magnetelement vorzugsweise direkt an der Außenseite der Gefäßwandung anliegt. Bei der Abdeckung handelt es sich vorzugsweise um eine vollständig oder abschnittsweise durchsichtige Abdeckung, die das Metall- oder Magnetelement überdacht. Hierbei wird das Metall- oder Magnetelement nicht vollständig umschlossen, so dass in Richtung der Gefäßwandung ein direkter Kontakt ermöglicht wird. In einer solchen Ausführungsform ist es vorzugsweise vorgesehen, dass das Metall- oder Magnetelement ein Bestandteil der Gefäßwandung ist oder auf der Gefäßwandung, insbesondere außenseitig, aufgebracht ist. Vorzugsweise ist es in einer Ausgestaltung des offenen Gehäuses vorgesehen, dass die Abdeckung mindestens eine Gehäusewandung aufweist oder aus dieser besteht, welche ein Sichtfenster umfasst und/oder zumindest teilweise durchsichtig ist, insbesondere wobei die Abdeckung auf Seitenwänden fixiert ist, die einstückig aus der Gefäßwandung ausgebildet sind, vorzugsweise wobei die Seitenwände erhalten wurden durch Spritzgießen aus einer Hohlform für die Außenwand mit Aussparungen für die Seitenwände.

Bei besagtem außenseitigem Aufbringen hat sich als vorteilhaft erwiesen, wenn das Metall- oder Magnetelement direkt an der Gefäßwandung anliegt, insbesondere fest mit dieser verbunden ist. Das Metall- oder Magnetelement kann dabei mit der Gefäßwandung verklebt oder verschweißt sein und/oder durch die Abdeckung fixiert werden. Es hat sich gezeigt, dass ein Ablösen des Metallelements so besser unterbunden werden kann. Dies ist insbesondere wichtig, da bereits bei einem teilweise ablösen die Gefahr einer Skalenverschiebung besteht. Derartige besonders robuste Ausführungsformen sind vorteilhaft für den Einsatz im Pflegebetrieb, wo Gefäße erhöhten Belastungen ausgesetzt sind. Auch eine vollständige Integration in die Gefäßwandung ist denkbar. In einer weiteren Ausgestaltung ist es auch denkbar, dass das Metallelement durch eine metallische Gefäßwandung ausgebildet wird, insbesondere wobei das Gefäß aus Metall besteht.

Die Abdeckung ist ausgelegt und eingerichtet, um das Markierungselement abzudecken. In einer Ausführungsform wird auch das Metall- oder Magnetelement insbesondere vollständig abgedeckt, was den Vorteil hat, dass ein Ablösen desselben durch die Abdeckung besser unterbunden und eine bessere Fixierung durch die Abdeckung ermöglicht wird. Hierbei ist es bevorzugt, wenn sich das Metall- oder Magnetelement und das Markierungselement in einen Innenraum befinden, der durch Gefäßwandung und Abdeckung begrenzt wird. In einer alternativen Ausführungsform ist die Abdeckung schmaler als das Metall- oder Magnetelement, so dass dieses nicht vollständig abgedeckt wird. Hierbei wird die Abdeckung vorzugsweise auf das Metall- oder Magnetelement aufgebracht, so dass dieses seitlich übersteht. In diesem Fall ist es bevorzugt, wenn die Abdeckung einen Innenraum, enthaltend das Markierungselement, ausbildet, der durch das Metall- oder Magnetelement und die Abdeckung begrenzt wird.

In einer weiteren Ausgestaltung ist es vorgesehen, dass die Abdeckung das Metall- oder Magnetelement und/oder den Innenraum in Segmente unterteilt, wobei die Abdeckung zwischen den Segmenten Stoppelemente aufweist. Vorzugsweise handelt es sich um Zwischenwände, welche von der Abdeckung in Richtung der Außenseite der Gefäßwandung, insbesondere senkrecht zur Abdeckung, ragen. Auch ist es zweckmäßig, wenn jedes so gebildete Segment mindestens ein, insbesondere genau ein, Markierungselement aufweist.

Vorzugsweise umschließt das Gehäuse das Markierungselement an mindestens vier Seiten, insbesondere auf allen Seiten, d.h. vollständig. Diese Ausführungsform wird nachfolgend als geschlossenes Gehäuse bezeichnet und ist abzugrenzen von einem offenen Gehäuse in Form einer Abdeckung, welche keine eigene Wandung in Richtung der Außenseite der Gefäßwandung aufweist. Insbesondere ist es bevorzugt, wenn durch die Gehäusewandungen ein tunnelförmiger Innenraum ausgebildet ist. Trotz des geschlossenen Gehäuses ist weiterhin eine Verschiebung des Markierungselements durch kontaktlose Krafteinwirkung mittels Magnetkraft möglich. In einer besonders geeigneten Ausgestaltung ist es dabei vorgesehen, dass das geschlossen Gehäuse durch ein Rohr mit einem, insbesondere tunnelförmigen, Innenraum ausgebildet ist. In einer besonders geeigneten Ausgestaltung ist es auch vorgesehen, dass das Rohr einen rechteckigen Querschnitt aufweist, insbesondere wobei der Querschnitt an die Abmessungen des Metall- oder Magnetelement angepasst ist. Vorzugsweise ist es vorgesehen, dass das Gehäuse am Gefäß befestigt ist, und dass sich der Metall- oder Magnetstreifen im Gehäuse befindet. Ferner ist es bevorzugt, wenn das geschlossene Gehäuse eine Gehäusewandung aufweist, welche flächig mit der Außenseite der Gefäßwandung in Kontakt steht, insbesondere mit dieser verklebt oder verschweißt ist. Beim Verschweißen wird vorzugsweise Ultraschallschweißen, Reibschweißen oder Laserschweißen eingesetzt. Bei der vorstehend beschriebenen geschlossenen Variante des Gehäuses ist es bevorzugt, wenn das Gehäuse eine erste Gehäusewandung in Richtung der Gefäßwandung und eine gegenüberliegende, insbesondere von der Gefäßwandung abgewandte, zweite Gehäusewandung aufweist, wobei letztere vorzugsweise vollständig oder abschnittsweise durchsichtig ist. Vorzugsweise ist die erste Gehäusewandung so gekrümmt, dass sie an einer ebenfalls gekrümmten Gefäßwandung unmittelbar anliegt. Insbesondere bevorzugt ist es auch wenn die erste Gehäusewandung mit der Gefäßwandung verklebt oder verschweißt ist. Beim Verschweißen wird vorzugsweise Ultraschallschweißen, Reibschweißen oder Laserschweißen eingesetzt.

In einer bevorzugten Ausgestaltung des geschlossenen Gehäuses ist dieses einstückig ausgeführt. In einer alternativen Ausgestaltung umfasst das geschlossene Gehäuse mehrere Teile. Insbesondere ist es bevorzugt, wenn eine erste Gehäusewandung am Gefäß anliegt und eine zweite Gehäusewandung nicht am Gefäß anliegt, wobei die zweite Gehäusewandung teilweise oder vollständig transparent ist.

Bei dem geschlossenen Gehäuse und/oder bei dem offenen Gehäuse in Form einer Abdeckung ist es bevorzugt, wenn sich sowohl das Markierungselement als auch das Metall- oder Magnetelement in einem Innenraum des Gehäuses befinden.

Vorzugsweise ist das Gehäuse, insbesondere das geschlossene Gehäuse oder die Abdeckung, so ausgebildet, dass ein Kontakt ohne Werkzeug zu dem Markierungselement nicht möglich ist. Insbesondere ist es bevorzugt, wenn das Markierungselement durch Gehäusewandungen und Gefäßwandungen und gegebenenfalls sonstigen Wandungen in einem vollständig geschlossenen Innenraum eingeschlossen ist, d.h. einem Innenraum, der in alle Richtungen Innenraumwandungen aufweist. Diese werden bei dem geschlossenen Gehäuse vorzugsweise durch die Wandungen des Gehäuses selbst ausgebildet und bei der Abdeckung vorzugsweise sowohl durch die Wandungen der Abdeckung als auch, insbesondere an der Rückseite in Richtung der Außenseite des Gefäßes, durch Gefäßwandung oder durch das Metall- oder Magnetelement. In einer bevorzugten Variante ist der Innenraum des Gehäuses tunnel- oder rohrförmig ausgestaltet und an den Enden verschlossen, so dass eine Entnahme des Markierungselements nicht möglich ist, jedoch eine Verschiebung entlang des Tunnels bzw. Rohrs möglich ist. Eine solche Bauweise unterbindet effektiv, dass nicht autorisierte Personen Zugriff auf das Markierungselement haben, da diese nicht über das Stellwerkzeug bzw. den Stellmagneten verfügen. In einer weiteren Ausgestaltung ist der Innenraum so ausgestaltet, dass Feuchtigkeit und/oder Flüssigkeit nicht eindringen kann.

Vorzugsweise ist das Markierungselement scheibenförmig, insbesondere ein scheibenförmiger Stellmagnet.

Vorzugsweise sind alle Bestandteile des Gefäßes so gewählt, dass beim Eintauchen in Wasserdampf und/oder Wasser mit einer Temperatur von 100°C, insbesondere von 120°C bei entsprechendem Überdruck, für 2 Stunden diese nicht beschädigt werden, insbesondere die erfindungsgemäße Markierungsfunktion weiterhin funktioniert. Vorzugsweise umfasst das Gefäß daher auch keine Schaltkreise oder sonstige strombetriebcnen Vorrichtungen.

In einer geeigneten Ausführungsform weist das Gehäuse, insbesondere das geschlossene Gehäuse oder die Abdeckung, mindestens eine Gehäusewandung auf, welche ein Sichtfenster umfasst oder ausbildet. Dabei ist es bevorzugt, wenn das Sichtfenster eine Längserstreckung aufweist und sich über diese Längserstreckung hinweg aus Richtung des Gefäßbodens in Richtung der Gefäßöffnung erstreckt.

Bevorzugt sind auch Ausführungsformen, in welchen das Rohr oder die Abdeckung einen, insbesondere tunnelförmigen, Innenraum, vorzugsweise in und/oder auf der Gefäßwandung, besonders bevorzugt auf der Gefäßwandung, ausbildet, der sich aus Richtung des Gefäßbodens in Richtung der Gefäßöffnung, insbesondere entlang der Außenseite, erstreckt. Vorzugsweise weist der Innenraum des Gehäuses eine Breite und eine Höhe auf, wobei die Höhe orthogonal zu der dem Gehäuse unterliegenden Gefäßwand bestimmt wird. Die Breite wird entsprechend orthogonal zur Höhe bestimmt. In einer bevorzugten Ausgestaltung ist es dabei vorgesehen, dass die Breite des Metall- oder Magnetelements kleiner ist als die Breite des Innenraums, jedoch nicht mehr als 10 % kleiner, vorzugsweise nicht mehr als 5 % kleiner, insbesondere nicht mehr als 1 % kleiner. Dies hat den Vorteil, dass eine laterale Verschiebung des Metall- oder Magnetelementes durch die Abmessung des Innenraums vermindert oder unterbunden wird.

Es hat sich als zweckmäßig erwiesen, wenn das Gefäß einen Verschlussdeckel umfasst, mit dem die Gefäßöffnung des Gefäßes verschlossen werden kann. Vorzugsweise umfasst der Verschlussdeckel eine, insbesondere schnabelförmige, Trinkgefäßöffnung.

In einer weiteren Ausführungsform umfasst das Gefäß mindestens ein weiteres Metall- oder Magnetelement und mindestens ein weiteres Markierungselement, welches in einer weiteren Führungsschiene gelagert ist. Vorzugsweise ist dabei ein erstes Metall- oder Magnetelement mit einem ersten Markierungselement und vorzugsweise mit mindestens einer ersten Skala vorgesehen, wobei das Gefäß, insbesondere an einer gegenüberliegenden Gefäßwandung, mindestens ein zweites Metall- oder Magnetelement mit mindestens einem zweiten Markierungselement aufweist. In einer solchen Ausgestaltung ist an einer, insbesondere gegenüberliegenden, Gefäßwandung des Trinkgefäßes vorzugsweise mindestens eine zweite Skala angebracht. Hierbei kann es vorgesehen sein, dass auf der ersten Skala eine tägliche Gesamttrinkmenge angezeigt wird, während auf einer gegenüberliegenden zweiten Skala die Anzahl der vollen Becher festgehalten wird. Das zweite bzw. weitere Metall- oder Magnetelement und das zweite bzw. weitere Markierungselement sind im Sinne der vorliegenden Erfindung gegenüberliegend zu dem ersten Metall- oder Magnetelement und dem ersten Markierungselement angeordnet, wenn sie im Bereich der im wesentlichen gegenüberliegenden Endpunkte des Durchmessers des erfindungsgemäßen Gefäßes vorliegen.

In den Ausführungsformen des erfindungsgemäßen Gefäßes können vorzugsweise auch mindestens zwei erste Skalen mit dem ersten Metall- oder Magnetelement und dem ersten Markierungselement vorgesehen sein. Hierbei können die mindestens zwei ersten Skalen auf derselben oder, was bevorzugt ist, auf gegenüberliegenden Seiten, insbesondere jeweils benachbart zu dem ersten Metall- oder Magnetelement und dem ersten Markierungselement vorliegen. Dabei kann auf der einen Seite des ersten Metall- oder Magnetelements und des ersten Markierungselements eine Literskala und jenseits des ersten Metall- oder Magnetelements und des ersten Markierungselements, d.h. gegenüberliegend eine Skala mit der entsprechenden Anzahl voller Becher vorliegen. Erstrecken sich das erste Metall- oder Magnetelement und das erste Markierungselement im Wesentlichen vertikal bei gattungsgemäßer Ablage des erfindungsgemäßen Gefäßes auf einer horizontalen Unterlage, kann zum Beispiel die Literskala auf der linken Seite und die Skala mit der entsprechenden Anzahl voller Becher auf der rechten Seite von erstem Metall- oder Magnetelement und erstem Markierungselement angebracht sein. Bei dieser Art der Verwendung mehrerer erster Skalen kann über die Anzahl geleerter Becher ohne weiteres auf die bereits getrunkene Flüssigkeitsmenge geschlossen werden. Beispielsweise kann auf gleicher Höhe zu der auf einer Skala angegebenen Anzahl geleerter Becher auf einer benachbarten Skala die entsprechende Menge in Litern abgelesen werden. Dadurch, dass gleichzeitig auch die getrunkene Menge in Litern angegeben werden kann, kann eine Voraussetzung dafür geschaffen werden, auf die Anfertigung schriftlicher Trinkprotokolle verzichten zu können.

Bei einer noch weiteren, ebenfalls bevorzugten Ausführungsform des erfindungsgemäßen Gefäßes, die mindestens ein weiteres Metall- oder Magnetelement und mindestens ein weiteres Markierungselement umfasst, welches in einer weiteren Führungsschiene bzw. einem weiteren Gehäuse gelagert ist, können zwei erste Skalen an einer oder, bevorzugt, an den sich gegenüberliegenden Seiten, zum Beispiel an der rechten und der linken Seite des ersten Metall- oder Magnetelements und des ersten Markierungselements vorliegen, und es können darüber hinaus mindestens eine erste weitere Skala an dem weiteren Metall- oder Magnetelement und dem mindestens einen weiteren Markierungselement vorliegen. Während in einer zweckmäßigen Ausgestaltung die eine erste Skala bzw. die zwei ersten Skalen genutzt werden können, um Angaben zur Trinkmenge festzuhalten, beispielsweise wie vorangehend beschrieben, kann die mindestens eine weitere Skala, die bei dem weiteren Metall- oder Magnetelement und dem weiteren Markierungselement vorliegt, genutzt werden, um Angaben wie Erkrankung, Grad der Demenz, Getränkeart, Mindesttrinkmenge, Trinkmengenbeschränkung und dergleichen festzuhalten. Über das in dem zweiten Gehäuse vorliegende weitere Metall- oder Magnetelement und das weitere Markierungselement und durch das Vorsehen von Einstell- bzw. Markierungsmöglichkeiten unter Zuhilfenahme einer weiteren Skala kann man in Kombination mit dem in dem ersten Gehäuse vorliegenden ersten Metall- oder Magnetelement und dem ersten Markierungselement dahin gelangen, schriftliche Trinkprotokolle in Papierform obsolet werden zu lassen. Art und Anbringung der ersten und zweiten Gehäuse sowie der ersten und zweiten Metall- oder Magnetelemente sowie der ersten und zweiten Markierungselemente in den ersten bzw. zweiten Gehäuse können in weiten Bereichen variiert und an den jeweiligen Einsatzzweck angepasst werden.

Besonders bevorzugt ist auch eine Ausgestaltung, bei der sich, insbesondere gegenüberliegend vom ersten Metall- oder Magnetelement, mindestens zwei, drei oder vier, insbesondere vier, weitere Metall- oder Magnetelemente oder mindestens zwei, drei oder vier, insbesondere vier, Segmente mindestens eines weiteren, insbesondere gegenüberliegenden, Metall- oder Magnetelements an den erfindungsgemäßen Gefäßen befinden, an welchen jeweils mindestens ein, insbesondere ein, Markierungselement und vorzugsweise jeweils mindestens eine Skala zugeordnet ist. Die mindestens zwei, drei oder vier Segmente können hierbei auch auf einem einheitlichen Metall- oder Magnetelement, beispielsweise in Form eines durchgehenden Metall- oder Magnetstreifens, ähnlich wie für das Metall- oder Magnetelement des ersten Gehäuses, vorliegen. Die Unterteilung in Segmente kann dabei durch Stopp- bzw. Abgrenzungselemente, die innenseitig von der Gehäuseabdeckung in Richtung des Metall- oder Magnetelements vorstehen, vorgenommen werden. Beispielsweise kann bei gattungsgemäßer Ablage des erfindungsgemäßen Gefäßes auf einer horizontalen Unterlage ein vertikal ausgerichtetes weiteres Metall- oder Magnetelement in unter- bzw. übereinander angeordnete Segmente unterteilt werden. Jedes Segment enthält dabei mindestens ein, vorzugsweise genau ein eigenes Markierungselement.

In einer weiteren Ausgestaltung ist es vorgesehen, dass mehrere Segmente eines Metall- oder Magnetelements, insbesondere übereinander, angebracht sind, insbesondere wobei jedem Segment eine Skala zugeordnet ist. Beispielsweise kann eine erste Skala mit einem ersten Metall- oder Magnetelement die Trinkmenge festhalten, eine gegenüberliegende zweite Skala mit einem zweiten Metall- oder Magnetelement die Anzahl der vollen Becher, und eine dritte Skala mit einem dritten Metall- oder Magnetelement unterhalb der zweiten Skala eine weitere Information enthalten, beispielsweise über die Getränkeart oder eine ärztliche Verordnung oder den gesundheitlichen Zustand einer pflegebedürftigen Person. Auch weitere vierte und fünfte Skalen, so dass vier bzw. fünf Skalen gegenüberliegend der ersten Skala angeordnet sind und die einem vierten bzw. fünften Metall- oder Magnetelement oder einem vierten bzw. fünften Segment eines Metall- oder Magnetelement und einem vierten bzw. fünften Markierungselement zugeordnet sind, sind denkbar und in einer Ausgestaltung bevorzugt. Hierbei sind die jeweiligen Metall- oder Magnetelemente derart weit voneinander beabstandet an dem Behältnis vorzusehen, dass eine gegenseitige magnetische Beeinflussung der Markierungselemente untereinander bzw. eine Beeinflussung eines benachbarten Markierungselements bei Bedienung mit einem magnetischen Stellwerkzeug nicht erfolgt.

In einer weiteren Ausgestaltung ist es vorgesehen, dass mehrere Metall- oder Magnetelemente und/oder Skalen, insbesondere übereinander, angebracht sind. Beispielsweise kann eine erste Skala mit einem ersten Metall- oder Magnetelement die Trinkmenge festhalten, eine, insbesondere jenseits des ersten Metall- oder Magnetelements vorliegende zweite Skala die Anzahl der vollen Becher angeben. Diese zweite Skala kann in Bezug auf das erste Metall- oder Magnetelement auf derselben Seite wie die erste Skala oder jenseits des ersten Metall- oder Magnetelements vorliegen. Eine dritte Skala mit weiteren Informationen, beispielsweise über die Getränkeart oder eine ärztliche Verordnung oder den gesundheitlichen Zustand einer pflegebedürftigen Person, kann ferner einem zweiten Metall- oder Magnetelement zugeordnet sein. Die dritte Skala und das zweite Metall- oder Magnetelement können hierbei in einer Ausgestaltung unterhalb der zweiten Skala angeordnet sein. Auch weitere vierte und fünfte Skalen sind denkbar und in einer Ausgestaltung bevorzugt, beispielsweise vier Skalen, die gegenüberliegend zu der ersten und/oder zweiten Skala angeordnet sind.

In einigen zweckmäßigen Ausgestaltungen der vorliegenden Erfindung ist es vorgesehen, dass jedes Metall- oder Magnetelement mit genau einem Markierungselement magnetisch verbunden ist. Obgleich es grundsätzlich auch möglich ist, mehrere Markierungselemente auf einem Metall- oder Magnetelement anzuordnen, beispielsweise um zwei Positionen auf derselben Skala zu markieren, ist es vorzugsweise vorgesehen, dass jedem Metall- oder Magnetelement genau ein Markierungselement und vorzugsweise genau eine Skala zuordenbar ist.

Die Erfindung betrifft ferner ein Trinkmengenüberwachungssystem, umfassend mindestens ein Stellwerkzeug und ein Gefäß, wie es vorstehend beschrieben wurde. Vorzugsweise umfasst das Stellwerkzeug magnetisches Material. In einer geeigneten Ausgestaltung handelt es sich um einen Stellmagneten, insbesondere um einen teilweise oder vollständig mit Kunststoff ummantelten Stellmagneten. Bei dem Trinkmengenüberwachungssystem kann eine Veränderung der Anzeige, d.h. der Position des Markierungselements, nur durch Personen erfolgen, die über das entsprechende Autorisierungsmittel in Form des Stellwerkzeugs verfügen.

Die Erfindung betrifft vorzugsweise ferner ein Gefäß, wie es vorstehend beschrieben wurde, umfassend eine Einrichtung zum Einstellen und Anzeigen eines Anzeigewerts, die eine Skala, ein Markierungselement, das aus magnetischem Material oder aus einem Magneten besteht oder einen Magneten umfasst, und einen Metall- oder Magnetstreifen aufweist, mit dem das Markierungselement durch Magnetkraft verbunden ist, wobei die Skala parallel zum Metall- oder Magnetstreifen verläuft, und das Markierungselement längs des Metall- oder Magnetstreifens verschiebbar ist, wobei die Einrichtung ferner ein Gehäuse aufweist, das einen Innenraum umschließt, in dem sich das Markierungselement und der Metall- oder Magnetstreifen befinden, und wobei das Markierungselement durch einen außerhalb des Gehäuses befindlichen Stellmagnet verschiebbar ist.

Die Einrichtung weist ein Markierungselement, das aus magnetischem Material oder aus einem Magneten besteht oder dieses umfasst, und einen Metall- oder Magnetstreifen, beispielsweise ein Metall- oder Magnetband oder eine Metall- oder Magnetfolie, mit dem das Markierungselement durch Magnetkraft verbunden ist. Parallel zum Metall- oder Magnetstreifen ist eine Skala angeordnet. Das Markierungselement ist längs des Streifens und somit auch längs der Skala verschiebbar. Ferner weist die Einrichtung ein zumindest teilweise durchsichtiges Gehäuse auf, das einen Innenraum umschließt, in dem sich das Markierungselement und der Metall- oder Magnetstreifen befinden. Das Markierungselement ist durch einen außerhalb des Innenraums befindlichen Stellmagnet verschiebbar.
Wenn der Streifen aus Magnetband oder -folie besteht, kann das Markierungselement aus einem Magneten geeigneter Polarität oder einem magnetischen Material bestehen, das durch Magnetkraft am Streifen haftet. Besteht der Streifen aus Metallband oder -folie oder umfasst er dieses, besteht das Markierungselement aus einem Magneten oder umfasst es diesen, der durch Magnetkraft am Streifen haftet. Die Magnetkraft zwischen dem Streifen und dem Markierungselement und die Magnetkraft zwischen dem Markierungselement und dem Stellmagnet sind so aufeinander abgestimmt, dass der Stellmagnet auf das Markierungselement eine genügend große Magnetkraft ausübt, um das Markierungselement trotz der zwischen dem Markierungselement und dem Streifen wirkenden Magnetkraft längs des Streifens zu verschieben. Der durch das Gehäuse vorgegebene Innenraum ist so bemessen, dass das Markierungselement genügend Spiel hat, um längs des Streifens verschoben werden zu können.
Wenn sich zwischen dem Gehäuse und dem Markierungselement ein Luftspalt befindet, kann die Magnetkraft des Stellmagneten so groß bemessen sein, dass das Markierungselement vom Streifen abgehoben wird, wenn der Stellmagnet direkt über dem Markierungselement positioniert wird. Wird der Stellmagnet dann längs des Gehäuses verschoben, folgt das Markierungselement der Bewegung des Stellmagneten, indem es an der Innenwand des Gehäuses entlang gleitet. Wird dann an der gewünschten Stelle der Skala der Stellmagnet weggenommen, schnappt das Markierungselement an dieser Stelle auf den Streifen zurück.

In einer erfindungsgemäßen Ausgestaltung ist die Einrichtung mit dem erfindungsgemäßen Gefäß baulich vereinigt. Das Gehäuse der Einrichtung weist dann eine Rückwand auf, die vorzugsweise so geformt ist, dass sie flächig auf die Außenwand des Trinkgefäßes aufgesetzt und mit dieser beispielsweise verklebt oder verschweißt werden kann. Beim Verschweißen wird vorzugsweise Ultraschallschweißen, Reibschweißen oder Laserschweißen eingesetzt. Bei einer anderen Ausführung kann der Streifen aber auch direkt auf das Trinkgefäß aufgeklebt sein, und das Gehäuse lediglich aus einer Abdeckung bestehen, die den Streifen und das Markierungselement abdeckt und mit dem Trinkgefäß verklebt oder verschweißt ist. Bei einer weiteren Ausführung ist der Streifen durch entsprechende Formgebung der Abdeckung fixiert, sodass keine Verklebung mit dem Trinkgefäß nötig ist.
Die Skala kann beispielsweise zur Anzeige einer Gesamttrinkmenge dienen, und zeigt dann die Anzahl der leergetrunkenen Trinkgefäße an, wenn nach jedem Austrinken mit dem Stellmagnet das Markierungselement um eine Skaleneinheit weitergeschoben wird. Wenn das Trinkgefäß mindestens eine Füllmarke aufweist, die die Füllmenge beispielsweise in Litern angibt, weist die Gesamttrinkmengenskala ebenfalls eine Literskala auf.
Die Skala kann am Streifen, am Gehäuse bzw. der Abdeckung der Einrichtung oder direkt auf dem Trinkgefäß angebracht sein. Es können auch mehrere Skalen vorhanden sein, die mit unterschiedlichen Einheiten versehen sind. Wenn die Skala / die Skalen am Rand des Streifens angebracht sind, ist das Markierungselement vorzugsweise schmäler ausgebildet als der Streifen.
Das Trinkgefäß kann auch mit mehreren Einrichtungen versehen sein, von denen beispielsweise eine erste eine Gesamttrinkmengenskala und eine zweite eine Skala aufweist, an der die Art des Getränks oder andere Hinweise eingestellt werden können.
Die Erfindung betrifft ferner ein Verfahren zum Einstellen und Anzeigen eines Anzeigewertes auf einem Gefäß wie es vorstehend beschrieben wurde und mit einer Einrichtung wie sie vorstehend beschrieben wurde, wobei das Verfahren die folgenden Schritte in dieser Reihenfolge umfasst:
a. Fixierung des Markierungselements in einer Ausgangsposition in dem Gehäuse mittels einer ersten Magnetkraft, die zwischen Markierungselement und Metall- oder Magnetelement wirkt, insbesondere wobei das Markierungselement einen Magneten umfasst oder darstellt,
b. Lösen des Markierungselements durch Einwirken der zweiten Magnetkraft eines Stellwerkzeugs, vorzugsweise wobei das Stellwerkzeug in Form eines Stellmagneten auf das Gehäuse aufgebracht wird,
c. Transport des Markierungselements innerhalb des Gehäuses durch Verschiebung des Stellwerkzeugs unter Einwirkung der zweiten Magnetkraft, vorzugsweise unter Einwirkung der ersten und zweiten Magnetkraft, von der Ausgangsposition in eine Endposition, insbesondere wobei Markierungselement und Metall- oder Magnetelement in unmittelbarem Kontakt stehen,
d. Fixierung des Markierungselements in dem Gehäuse in einer Endposition mittels der ersten Magnetkraft, die zwischen Markierungselement und Metall- oder Magnetelement wirkt, unter Entfernung des Stellwerkzeugs, insbesondere so dass die zweite Magnetkraft nicht mehr auf das Markierungselement einwirkt.

Es hat sich gezeigt, dass durch den Einsatz verschieden starker Magnetkräfte ein manipulationssicheres Einstellen und Anzeigen eines Anzeigewertes ermöglicht wird. Das Markierungselement bleibt dabei während jedes Verfahrensschrittes in dem Gehäuse, so dass ein unmittelbarer Kontakt effektiv unterbunden werden kann.

Vorzugsweise ist es vorgesehen, dass die zweite Magnetkraft größer als die erste Magnetkraft ist, insbesondere wobei die erste Magnetkraft auch während des Transportvorgangs in Schritt c. wirkt. Grundsätzlich wäre es auch möglich, ähnlich starke Magneten zu verwenden. Hierbei würde aber ein kontaktloses Verschieben des Markierungselements erheblich erschwert werden. Die Erfahrung hat gezeigt, dass es am zweckmäßigsten ist, ein Stellwerkzeug mit einer deutlich größeren zweiten Magnetkraft einzusetzen. Auch ist es bevorzugt, wenn die erste Magnetkraft kontinuierlich während des Transports fortwirkt. Damit kann das Stellwerkzeug zu jedem Zeitpunkt an einer beliebigen Position entfernt werden, so dass das Markierungselement mittels der ersten Magnetkraft an der Entfernungsposition fixiert bleibt. Insbesondere besteht nicht die Gefahr, dass auf das Markierungselement keinerlei Magnetkraft einwirkt, so dass sich dieses frei zu einer nicht gewünschten Position bewegen könnte.

Ferner ist es bevorzugt, wenn das Stellwerkzeug in Schritt c. entlang einer Gehäusewand geführt wird, insbesondere in Form eines Sichtfensters. Hierbei hat sich gezeigt, dass Sichtfenster im Regelfall hinreichend durchlässig für Magnetkräfte sind. Auch die Sichtbarkeit des Markierungselements wird so gewährleistet. Ferner ist es bevorzugt, wenn das Sichtfenster plan, d. h. flach, ist, so dass das Stellwerkzeug besonders einfach an der flachen Seite entlanggeführt werden kann.

In einer Ausgestaltung des Verfahrens ist es vorgesehen, dass das Markierungselement in Schritt c. entlang des Metall- oder Magnetelements transportiert wird, insbesondere so dass während des Transports ein Kontakt zwischen Markierungselement und Metall- oder Magnetelement besteht. Dies hat auch den Vorteil, dass ein lautloses Verschieben möglich ist, da das Markierungselement beim Entfernen des Stellwerkzeugs, insbesondere des Stellmagneten, nicht auf das Metall- oder Magnetelement aufschlägt. Dies hilft auch verhindern, dass das Markierungselement, insbesondere wenn in spröder Form vorliegend, beschädigt wird. Es hat sich überaschenderweise gezeigt, dass auch bei fortbestehendem Kontakt zwischen Markierungselement und Metall- oder Magnetelement ein Gleiten möglich ist.

Das Einstellen des Markierungselements mit dem Stellwerkzeug, insbesondere Stellmagnet, kann von gesunden Personen leicht vorgenommen werden. Bei Personen, die dazu nicht mehr in der Lage sind, beispielsweise Demenzkranken, werden die Einstellungen von autorisiertem Pflegepersonal vorgenommen, das dann auch das Stellwerkzeug, insbesondere den Stellmagnet, verwahrt. Das Trinkgefäß kann mit einem Verschlussdeckel mit auslaufsicherem Mundstück versehen sein, damit ein versehentliches Ausschütten der Flüssigkeit nicht möglich ist, und die getrunkene Flüssigkeitsmenge sicher festgestellt werden kann.

Bei dem Trinkmengenüberwachungssystem kann eine Veränderung der Anzeige, d.h. der Position des Markierungselements, nur durch autorisierte Personen erfolgen, die über das entsprechende Autorisierungsmittel in Form des Stellwerkzeugs verfügen. Nicht autorisierte Personen, die über kein Autorisierungsmittel verfügen, können die Anzeige nicht verändern. Dementsprechend ist es dem Pflegepersonal möglich, die Trinkmenge zuverlässig zu überwachen, ohne dass eine Verfälschung der Daten, beispielsweise durch Pflegebedürftige oder Besucher, ohne weiteres möglich ist. Insbesondere wird auch ein unabsichtliches Verstellen der Anzeige verhindert. Dies gilt sogar für den Fall, falls das Gerät beispielsweise aus Tischhöhe auf den Boden fällt. Derartige Schutzmaßnahmen sind im Pflegebereich von erheblicher Bedeutung, da Pflegebedürftige oftmals nicht genug trinken. Dies kann im Extremfall zu unmittelbaren Gesundheitsschäden aufgrund des Flüssigkeitsmangels führen und in Verbindung mit einem geschwächten Zustand sogar tödlich sein. Somit geht von dem absichtlichen oder unabsichtlichen Verstellen der Anzeige über die getrunkene Menge eine erhebliche Gefahr für das Wohlbefinden und die Gesundheit der Pflegebedürftigen, insbesondere von Demenzkranken, aus.
Statt dem Stellwerkzeug, insbesondere dem Stellmagneten, sind selbstverständlich auch andere Autorisierungsmittel denkbar. Beispielsweise könnte eine digitale Anzeige verwendet werden, die nur mit einem Autorisierungscode geändert werden kann. Derartige Lösungen haben in der Praxis jedoch erhebliche Nachteile, insbesondere was die Robustheit, die Komplexität und die Kosten betrifft. Mit der vorliegenden Erfindung wird ein besonders einfaches System bereitgestellt, welches nicht nur hinreichend sicher, sondern auch kostengünstig und robust ist. Insbesondere kann ein solches robustes System auch ohne weiteres in der Spülmaschine gewaschen werden, was im Pflegebetrieb eine erhebliche und oftmals sogar dringend erforderliche Erleichterung darstellt. Auch in der Herstellung ist das System, welches aus vergleichsweise wenigen Bauteilen besteht, besonders kostengünstig. Dies ist ebenfalls im Pflegebereich von besonderer Bedeutung, da dort der Kostendruck erfahrungsgemäß besonders hoch ist.
Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Das Gefäß, insbesondere Trinkgefäß, mit einer Einrichtung zum Einstellen und Anzeigen eines Anzeigewerts wird nachstehend anhand von Ausführungsbeispielen erläutert. Dabei zeigt:

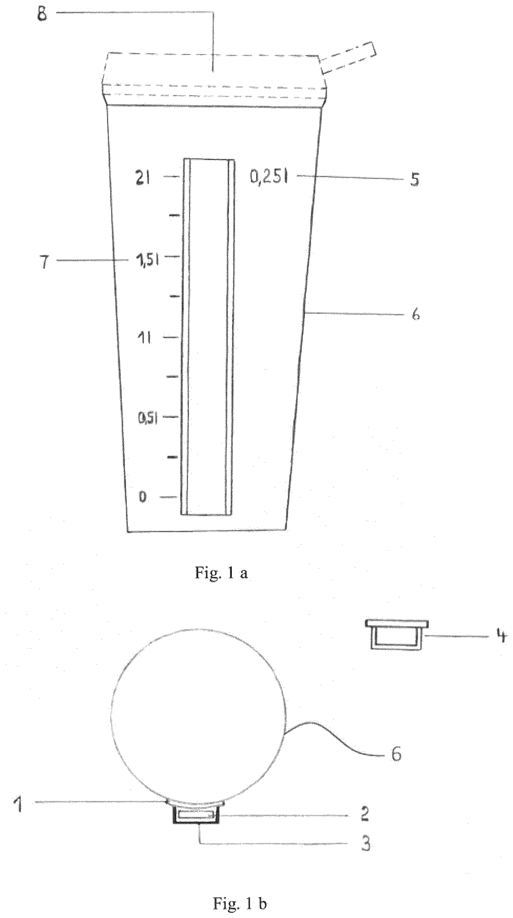

- Figur 1 a: die schematische Darstellung einer ersten Ausführungsform des erfindungsgemäßen Trinkgefäßes;
- Figur 1 b:: die schematische Darstellung des Querschnitts der ersten Ausführungsform aus Figur 1 a;
- Figur 2 a:: die schematische Darstellung einer zweiten Ausführungsform des erfindungsgemäßen Trinkgefäßes;

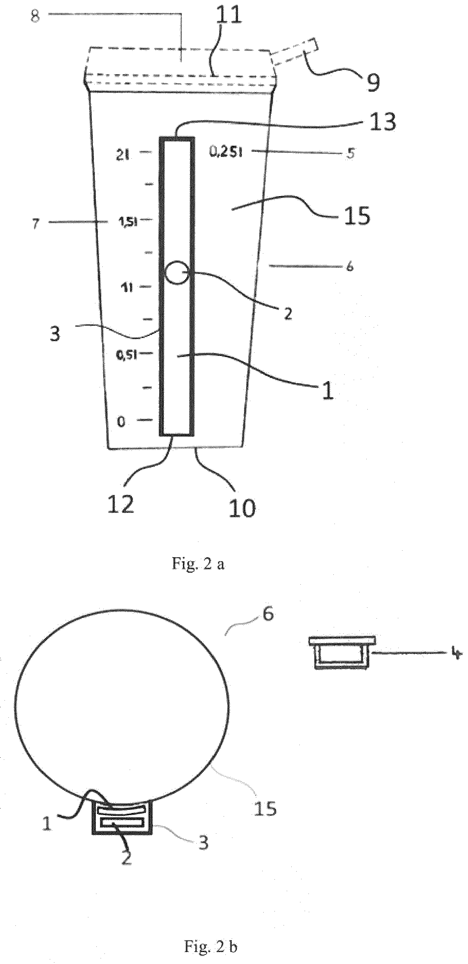

- Figur 2 b:: die schematische Darstellung des Querschnitts der zweiten Ausführungsform aus Figur 2 a;

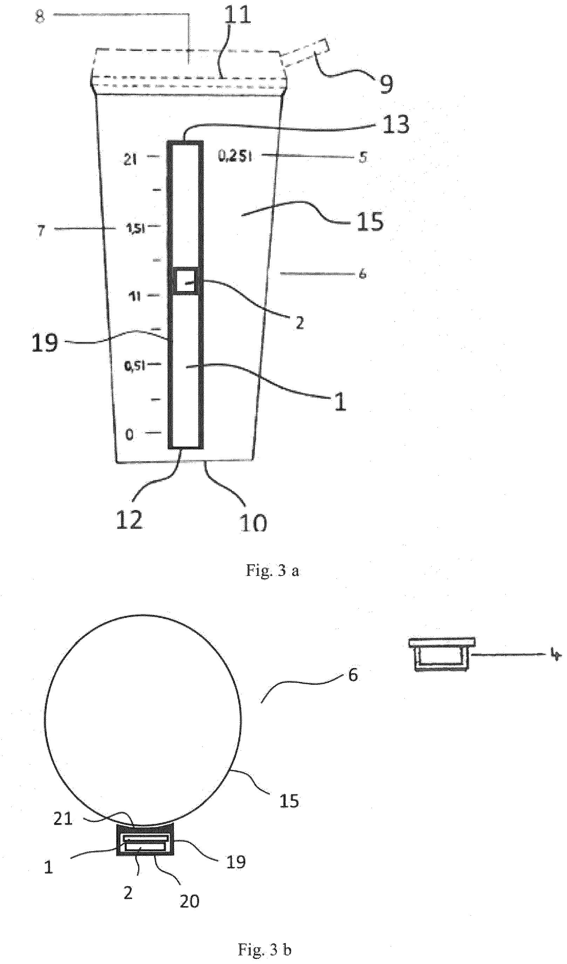

- Figur 3 a: die schematische Darstellung einer dritten Ausfuhrungsform des erfindungsgemäßen Trinkgefäßes;
- Figur 3 b:: die schematische Darstellung des Querschnitts der dritten Ausführungsform aus Figur 3 a;

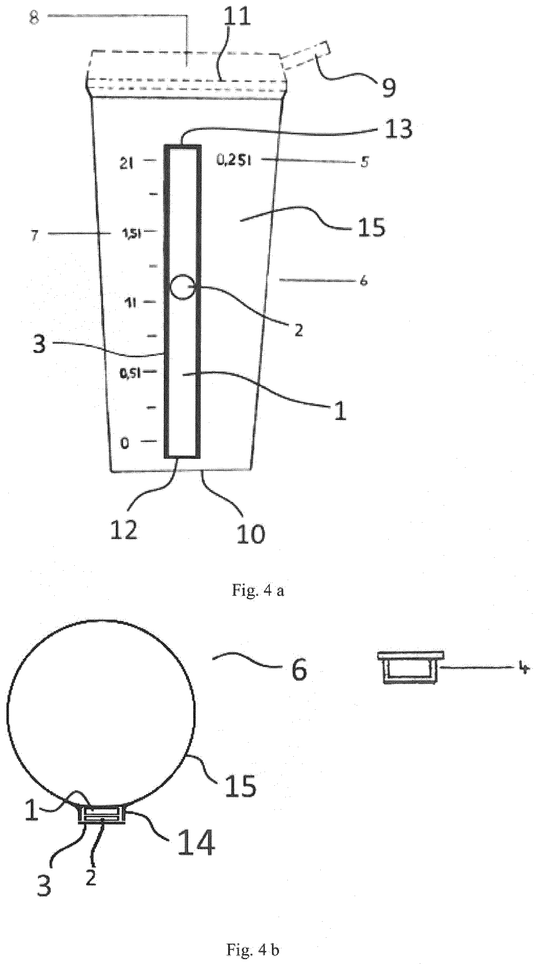

- Figur 4 a: die schematische Darstellung einer vierten Ausrührungsform des erfindungsgemäßen Trinkgefäßes;
- Figur 4b:: die schematische Darstellung des Querschnitts der vierten Ausführungsform aus Figur 4 a;

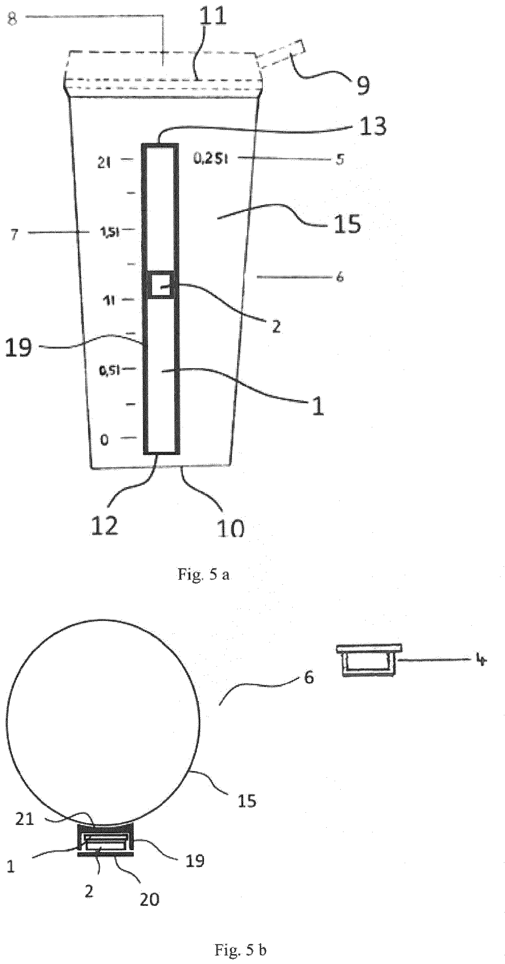

- Figur 5 a: die schematische Darstellung einer fünften Ausführungsform des erfindungsgemäßen Trinkgefäßes;
- Figur 5 b: die schematische Darstellung der fünften Ausführungsform des erfindungsgemäßen Trinkgefäßes bei Verwendung einer separaten Baugruppe;

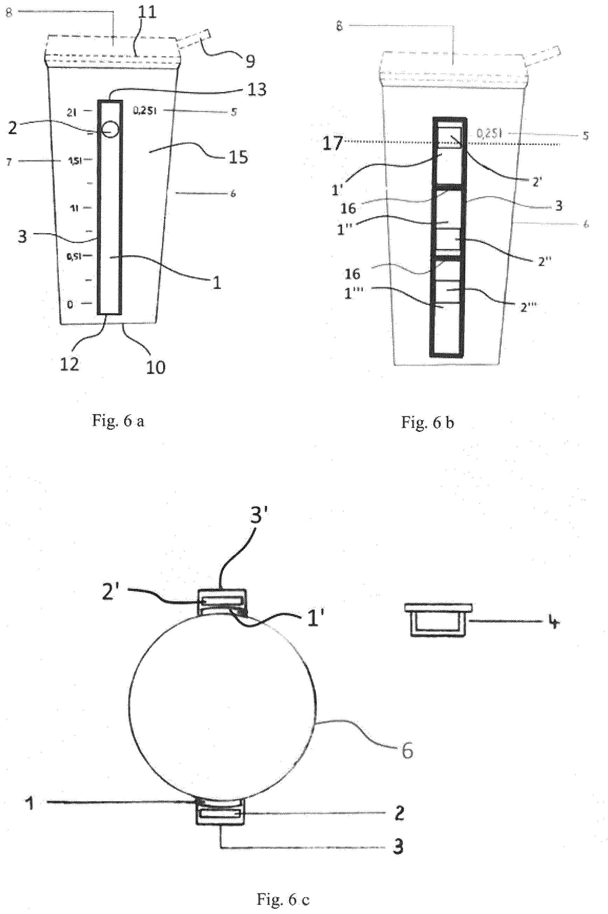

- Figur 6 a: die schematische Darstellung einer sechsten Ausführungsform des erfindungsgemäßen Trinkgefäßes;
- Figur 6 b: die schematische Darstellung der gegenüberliegenden Seite der sechsten Ausführungsform des erfindungsgemäßen Trinkgefäßes;
- Figur 6 c:: die schematische Darstellung des Querschnitts der sechsten Ausführungsform aus Figur 6 a und 6 b;

Eine erste Ausführungsform des Trinkgefäßes mit einer Einrichtung zum Einstellen und Anzeigen einer Gesamttrinkmenge ist in Figur 1a und 1b dargestellt.

Fig. 1 a zeigt schematisch die erste Ausführungsform des Trinkgefäßes 6, das mit einer Gesamttrinkmengenskala 7 und Füllmarken 5 versehen ist. Das Trinkgefäß 6 ist wahlweise mit einem Verschlussdeckel 8 ausgestattet, der aufsteckbar oder aufschraubbar und vorzugsweise mit einem auslaufsicheren Mundstück versehen ist. Parallel zur Gesamttrinkmengenskala 7 ist eine Einrichtung zum Einstellen und Anzeigen einer Gesamttrinkmenge angebracht, deren Länge mindestens der Länge der Gesamttrinkmengenskala 7 entspricht. Das Markierungselement ist nicht dargestellt.

Fig. 1b zeigt die Einrichtung der ersten Ausführungsform schematisch im Querschnitt, Sie weist einen Metall- oder Magnetstreifen 1, ein offenes Gehäuse in Form einer Abdeckung 3 und ein Markierungselement 2 auf, das aus magnetischem Material oder aus einem Magneten besteht. Wie Fig. 1b zeigt, kann das offene Gehäuse in Form einer Abdeckung 3 als aufgestülptes U-Profil ausgeführt sein. Wenn der Streifen 1 aus Magnetband oder -folie besteht, kann das Markierungselement 2 aus einem Magneten oder einem magnetischen Material bestehen, das durch Magnetkraft an dem Streifen 1 haftet. Besteht der Streifen 1 aus Metallband oder -folie, besteht das Markierungselement 2 aus einem Magneten, der durch Magnetkraft an dem Streifen 1 haftet. Die Einrichtung weist ferner einen separaten Stellmagnet 4 zum Verschieben des Markierungselements 2 auf.

Der Streifen 1 ist auf das Trinkgefäß 6 aufgebracht. Das Gehäuse bzw. die Abdeckung 3 ist so am Streifen 1 angebracht, dass ein Innenraum entsteht, in dem sich das Markierungselement 2 befindet. Der Innenraum ist so bemessen, dass das im vorliegenden Fall eine kreisförmige Grundform aufweisende Markierungselement 2 genügend Spiel hat, um längs des Streifens 1 verschoben werden zu können. Zwischen dem Markierungselement 2 und der Abdeckung 3 befindet sich ein geringer Luftspalt. Die Abdeckung 3 ist durchsichtig und an die Form des Trinkgefäßes 6 so angepasst, dass der Innenraum allseits geschlossen ist.

Das Verschieben des Markierungselements 2 erfolgt mittels des Stellmagneten 4. Die Magnetkräfte des Stellmagneten 4 und des Markierungselements 2 bzw. des Streifens 1 sind so aufeinander abgestimmt, dass bei einem Aufsetzen des Stellmagneten 4 auf die Abdeckung 3 direkt über dem Markierungselement 2 dieses gegebenenfalls vom Streifen 1 abgelöst wird und durch Bewegen des Stellmagneten 4 längs der Gesamttrinkmengenskala 7 verschoben werden kann. Die Magnetkraft zwischen dem Stellmagnet 4 und dem Markierungselement 2 muss daher größer sein als die Magnetkraft zwischen dem Streifen 1 und dem Markierungselement 2. Wird der Stellmagnet 4 dann an der gewünschten Stelle entfernt, wird das Markierungselement 2 dort wieder magnetisch am Streifen 1 haften.

Fig. 2 a zeigt schematisch eine zweite Ausführungsform des Trinkgefäßes 6, das mit einer Gesamttrinkmengenskala 7 und der Füllmarke 5 bei 0,251 versehen ist. Das Trinkgefäß 6 ist mit einem Verschlussdeckel 8 ausgestattet, der aufsteckbar und mit einem auslaufsicheren Mundstück 9 versehen ist. Parallel zur Gesamttrinkmengenskala 7 ist eine Einrichtung mit einem Metall- oder Magnetstreifen 1, vorzugsweise einem magnetisierbaren Metallstreifen, und einem magnetischen Markierungselement 2 zum Einstellen und Anzeigen einer Gesamttrinkmenge und einem Gehäuse in Form einer Abdeckung 3 angebracht. Die Länge der Einrichtung entspricht mindestens der Länge der Gesamttrinkmengenskala 7. Das Gefäß weist einen Gefäßboden 10 und eine gegenüberliegende Gefäßöffnung 11 auf. Der Streifen erstreckt sich aus Richtung des Gefäßbodens 10 von einem ersten Streifenende 12 in Richtung der Gefäßöffnung 11 bis zu einem zweiten Streifenende 13. Das Gefäß 6 weist eine Gefäßwandung 15 auf.

Fig. 2b zeigt die zweite Ausführungsform des Trinkgefäßes 6 schematisch im Querschnitt. Die Einrichtung zum Einstellen und Anzeigen der Gesamttrinkmenge weist einen Metall- oder Magnetstreifen 1, ein offenes Gehäuse in Form einer Abdeckung 3 und ein Markierungselement 2 auf, das magnetisches Material oder einen Magneten umfasst. Wie Fig. 2 b zeigt, kann auch hier das offene Gehäuse in Form einer Abdeckung 3 als aufgestülptes U-Profil ausgeführt sein. Die Einrichtung weist ferner ein separates Stellwerkzeug 4 zum Verschieben des Markierungselements 2 auf. Die Abdeckung 3 ist mit der Außenwandung 15 so verbunden, dass ein Innenraum entsteht, in dem sich der Metall- oder Magnetstreifen 1 und das Markierungselement 2 befinden. Die Abdeckung 3 und das Trinkgefäß bestehen vorwiegend aus Kunststoff, wobei die Abdeckung durch Kleben oder Schweißen an der Gefäßwandung 15 befestigt ist. Beim Verschweißen wird vorzugsweise Ultraschallschweißen, Reibschweißen oder Laserschweißen eingesetzt. Der Innenraum ist so bemessen, dass das Markierungselement 2 genügend Spiel hat, um längs des Metall- oder Magnetstreifens 1 verschoben werden zu können. Zwischen dem Markierungselement 2 und der Abdeckung 3 kann sich ein geringer Luftspalt befinden. Die Abdeckung 3 ist durchsichtig und an die Form des Trinkgefäßes 6 so angepasst, dass der Innenraum allseits geschlossen ist. Der Metall- oder Magnetstreifen 1 ist mit der Außenwandung 15 verbunden, insbesondere verklebt oder verschweißt.

Fig. 3 a zeigt schematisch eine dritte Ausführungsform des Trinkgefäßes 6 mit einer Einrichtung zum Einstellen und Anzeigen der Gesamttrinkmenge. Die wesentlichen Elemente dieser schematischen Ansicht entsprechen denen der Fig. 2a, wobei das Markierungselement 2 hier eine quadratische Grundform aufweist und weitere Abweichungen in Fig. 3 b ersichtlich werden. Auch weist das Trinkgefäß 6 in dieser Ausführungsform ein geschlossenes Gehäuse 19 statt einer Abdeckung 3 auf.

Fig. 3b zeigt schematisch die dritte Ausführungsform des Trinkgefäßes 6 im Querschnitt, wobei die Unterschiede zur zweiten Ausführungsform deutlich werden. Die Einrichtung weist einen Metall- oder Magnetstreifen 1 und ein magnetisches Markierungselement 2 auf, die sich in einem geschlossenen Gehäuse 19 befinden. Anstatt der in den bisherigen Ausführungsformen verwendeten Abdeckungen, welche in Richtung der Gefäßwandung 15 keine Wandung aufweisen, umschließt das Gehäuse 19 den Metall- oder Magnetstreifen 1 und das Markierungselement 2 vollständig, wobei durch die Gehäusewandungen ein tunnelförmiger Innenraum ausgebildet ist. Trotz des hier einteiligen geschlossenen Gehäuses ist weiterhin eine Verschiebung des Markierungselements 2 durch kontaktlose Krafteinwirkung mittels der Magnetkraft des Stellmagneten 4 möglich. Es ist dabei vorgesehen, dass das geschlossene Gehäuse einen tunnel- bzw. rohrförmigen Innenraum ausbildet, wobei dieser Innenraum einen rechteckigen Querschnitt aufweisen kann, der an die Abmessungen des Metall- oder Magnetelements angepasst ist. Das geschlossene Gehäuse 19 ist an der Gefäßwandung 15 befestigt, wobei sich der Metall- oder Magnetstreifen 1 und das Markierungselement 2 im geschlossenen Gehäuse befinden. Die Befestigung erfolgt durch Verkleben oder Verschweißen, insbesondere Ultraschallschweißen, Reibschweißen oder Laserschweißen. Das Gehäuse kann grundsätzlich ein-, zwei- oder mehrteilig ausgebildet sein. In der in Fig. 3 b gezeigten Ausführungsform ist das Gehäuse einteilig ausgebildet.

Das einteilige, geschlossene Gehäuse 19 weist eine erste Gehäusewandung 21 in Richtung der Gefäßwandung 15 und eine gegenüberliegende, von der Gefäßwandung abgewandte, zweite, einteilig ausgebildete Gehäusewandung 20 auf, wobei letztere durchsichtig ist. Dabei ist die erste Gehäusewandung 21 so gekrümmt, dass sie an einer ebenfalls gekrümmten Gefäßwandung 15 unmittelbar anliegt.

Fig. 4 a zeigt schematisch eine vierte Ausführungsform des Trinkgefäßes 6. Die wesentlichen Elemente dieser schematischen Ansicht entsprechen denen der Fig. 2a, wobei die Abweichungen in Fig. 4b ersichtlich werden.

Fig. 4b zeigt die vierte Ausführungsform des Trinkgefäßes 6 schematisch im Querschnitt. Die Einrichtung zum Einstellen und Anzeigen der Gesamttrinkmenge weist einen Metall- oder Magnetstreifen 1, vorzugsweise einen Metallstreifen, und ein Markierungselement 2 auf. Das Markierungselement 2 ist zwischen dem Metall- oder Magnetstreifen 1 und dem Frontteil des Gehäuses in Form der Abdeckung 3 gleitbar gelagert. Die Einrichtung weist ferner ein separates Stellwerkzeug 4 zum Verschieben des Markierungselements 2 auf. Das Gehäuse bzw. die Abdeckung 3 umfasst ferner Seitenwände 14, welche ausgehend von der Außenwand 15 ausgebildet sind, und einen frontseitigen Abschluss. Die Seitenwände 14 und die Außenwand 15 bzw. das Trinkgefäß 6 können hierbei mittels Spritzguss einstückig ausgebildet sein. Die Verbindung dieses frontseitigen Abschlusses, beispielsweise in Form einer Platte, mit den Seitenwänden 14 erfolgt vorzugsweise durch Verkleben oder Verschweißen, insbesondere Ultraschallverschweißung, Reibverschweißung oder Laserverschweißung, vorzugsweise Ultraschallverschweißung.

Die Außenwand 15 mit den ausgeformten Seitenwänden 14 und dem frontseitigen Abschluss des Gehäuses in Form der Abdeckung 3 bilden einen Innenraum für den Metall- oder Magnetstreifen 1 und das Markierungselement 2. Hierbei sind in der dargestellten Ausführungsform die Seitenwänden 14 einstückig als Bestandteil der Außenwand 15 ausgebildet, insbesondere erhalten durch Spritzgießen aus einer Hohlform für die Außenwand 15 mit Aussparungen für die Seitenwände 14. Der Innenraum ist so bemessen, dass das Markierungselement 2 genügend Spiel hat, um längs des Metall- oder Magnetstreifens 1 verschoben werden zu können. Zwischen dem Markierungselement 2 und der Abdeckung 3 kann sich ein geringer Luftspalt befinden. Die Magnetkräfte des Stellwerkzeugs 4 und des Markierungselements 2 bzw. des Metall- oder Magnetstreifen 1 sind so aufeinander abgestimmt, dass bei einem Aufsetzen des Stellwerkzeugs 4 auf den frontseitigen Abschluss der Abdeckung 3 direkt über dem Markierungselement 2, das Markierungselement 2 einer Bewegung des Stellwerkzeugs 4 längs der Skala 7 folgt. Die Magnetkraft zwischen dem Stellwerkzeug 4 und dem Markierungselement 2 ist im Regelfall größer als die Magnetkraft zwischen dem Streifen 1 und dem Markierungselement 2. Wird das Stellwerkzeug 4 an der gewünschten Stelle entfernt, wird das Markierungselement 2 magnetisch am Metall- oder Magnetstreifen 1 fixiert.

Fig. 5 a zeigt schematisch eine fünfte Ausführungsform des Trinkgefäßes 6 mit einer Einrichtung zum Einstellen und Anzeigen der Gesamttrinkmenge, wobei die wesentlichen Elemente dieser schematischen Ansicht denen der Fig. 3 a entsprechen und die Abweichungen in Fig. 5b ersichtlich werden.

Fig. 5b zeigt schematisch die fünfte Ausführungsform des Trinkgefäßes 6 im Querschnitt, wobei die Unterschiede zur dritten Ausführungsform deutlich werden. Statt des einstückigen geschlossenen Gehäuses der dritten Ausführungsform handelt es sich nunmehr um ein zweiteiliges geschlossenes Gehäuse 19, wobei ein erstes Gehäuseteil 21 in Richtung der Gefäßwandung 15 und ein gegenüberliegendes, von der Gefäßwandung abgewandtes, separates frontseitiges Gehäuseteil 20 vorliegt, welches mit dem ersten Gehäuseteil 21 verbunden, insbesondere verklebt oder verschweißt ist. Das zweiteilige Gehäuse 19 umschließt den Metall- oder Magnetstreifen und das Markierungselement 2 vollständig, wobei durch die Gehäusewandungen ein tunnelförmiger Innenraum ausgebildet ist. Es ist dabei vorgesehen, dass das zweiteilige geschlossene Gehäuse einen tunnelförmigen Innenraum ausbildet, wobei dieser Innenraum einen rechteckigen Querschnitt aufweist, der an die Abmessungen des Metall- oder Magnetelement angepasst ist. Die Einrichtung weist einen Metall- oder Magnetstreifen 1 und ein magnetisches Markierungselement 2 auf, das sich in einem zweiteiligen geschlossenen Gehäuse 19 befindet. Trotz des geschlossenen Gehäuses ist weiterhin eine Verschiebung des Markierungselements 2 durch kontaktlose Krafteinwirkung mittels der Magnetkraft des Stellmagneten 4 möglich. Das geschlossene Gehäuse 19 ist über die Gehäusewandung 21 an der Gefäßwandung 15 befestigt, wobei sich der Metall- oder Magnetstreifen 1 im zweiteiligen geschlossenen Gehäuse befindet. Die Befestigung erfolgt durch Verkleben oder Verschweißen, insbesondere Ultraschallschweißen, Reibschweißen oder Laserschweißen.

6 a zeigt schematisch eine sechste Ausführungsform des Trinkgefäßes 6 mit einer Einrichtung zum Einstellen und Anzeigen der Gesamttrinkmenge. Die wesentlichen Elemente dieser schematischen Ansicht entsprechen in Bezug auf die Einrichtung zum Einstellen und Anzeigen der Gesamttrinkmenge der Fig. 2a, wobei das Markierungselement 2 hier in eine geringfügig andere Position verschoben vorliegt.

Fig. 6b zeigt schematisch die sechste Ausführungsform des Trinkgefäßes 6 in einer Seitenansicht, enthaltend drei übereinander angeordnete Einrichtungen zum Einstellen und Anzeigen von drei nutzerbezogenen Informationen. Diese drei Einrichtungen sind gegenüberliegend zu der Einrichtung zum Einstellen und Anzeigen der Gesamttrinkmenge gemäß Fig. 6 a angeordnet. Diese drei Einrichtungen zum Einstellen und Anzeigen von drei nutzerbezogenen Informationen basieren auf einem Metall- oder Magnetstreifen, der durch Stoppelemente 16 in Streifensegmente 1', 1" und 1"' mit jeweils einem eigenen magnetischen Markierungselement 2', 2" bzw. 2"' untergliedert ist. Die jeweiligen Stoppelemente begrenzen den Bewegungsraum der jeweiligen Markierungselemente. Die Stoppelemente 16 sind in der dargestellten Ausführungsform nach innen ragende Bestandteile der durchgehenden frontseitigen Abgrenzung bzw. Platte des Gehäuses bzw. der Abdeckung 3. Der Metall- oder Magnetstreifen 1 ist ebenfalls durchgehend ausgebildet wie bei der Einrichtung 1 auf der gegenüberliegenden Seite. Über eine solche Anordnung lassen sich verschiedene Informationen mit jedem der Markierungselemente 2', 2" bzw. 2"' darstellen. Bei der dargestellten Ausführungsvariante sind die Metall- oder Magnetstreifen auf den gegenüberliegenden Seiten des Trinkgefäßes jeweils eigenständig und durchgehend ausgeführt. Die Segmente 1', 1" und 1"' stellen dabei Teilstrecken bzw. Segmente des einheitlichen Streifens dar.

Fig. 6c zeigt schematisch die sechste Ausführungsform des Trinkgefäßes 6 im Querschnitt. Der Querschnitt wurde dabei an der Linie 17 der Fig. 6b vorgenommen, so dass nur Elemente der Metall- oder Magnetstreifen 1 und 1' und der Markierungselemente 2 und 2' sichtbar sind. Der Metall- oder Magnetstreifen 1 ist wie bei der Figur 2b mit der Gefäßwandung 15 verbunden, insbesondere mit dieser verklebt oder verschweißt. An der Gefäßwandung 15 sind die Metall- oder Magnetstreifen 1 und 1' sowie die Gehäuse in Form der Abdeckungen 3 und 3' befestigt. Die Abdeckungen 3 bzw. 3' bilden jeweils mit der Gefäßwandung 15 einen Innenraum. In einem durch die erste Abdeckung 3 gebildeten ersten Innenraum sind ein erster Metall- oder Magnetstreifen 1 sowie ein erstes Markierungselement 2 untergebracht und in einem gegenüberliegenden durch die zweite Abdeckung 3' gebildeten zweiten Innenraum sind ein zweiter Metall- oder Magnetstreifen 1' sowie ein zweites Markierungselement 2' untergebracht.
Selbstverständlich können auch die in den Figuren 1 bis 5 wiedergegebenen Trinkbehältnisse mit einer weiteren Einrichtung zum Einstellen und Anzeigen nutzerbezogener Informationen, wie in Figur 6b wiedergegeben und wie vorangehend erläutert, ausgestattet sein.

### Bezugszeichenliste

- 1: Metall- oder Magnetstreifen
- 2: Markierungselement
- 3: Abdeckung
- 4: Stellmagnet
- 5: Füllmarken
- 6: Trinkgefäß
- 7: Gesamttrinkmengenskala
- 8: Verschlussdeckel
- 9: Mundstück
- 10: Gefäßboden
- 11: Getäßöffnung
- 12: Unteres Streifenende des Metall- oder Magnetstreifens
- 13: Oberes Streifenende des Metall- oder Magnetstreifens
- 14: Seitenwände
- 15: Gefäßwandung
- 16: Stoppelemente
- 17: Position für die Querschnittsdarstellung von Fig. 6 c
- 19: geschlossenes Gehäuse
- 20: zweite Gehäusewandung
- 21: erste Gehäusewandung

## Patentansprüche

1. Gefäß, insbesondere Trinkgefäß, mit einer Einrichtung zum Einstellen und Anzeigen eines Anzeigewertes, umfassend
mindestens eine Gefäßwandung (15) mit einer Innenseite und einer Außenseite, einen Gefäßboden (10) und eine, insbesondere gegenüberliegende, Gefäßöffnung (11) sowie ein Metall- oder Magnetelement (1) und ein Markierungselement (2),
wobei das Metall- oder Magnetelement (1) magnetisches Material und/oder metallisches Material umfasst und sich vorzugsweise entlang der mindestens einen Gefäßwandung (15) des Gefäßes (6) erstreckt,
wobei das Markierungselement (2) in und/oder unter einem Gehäuse (3, 19) gelagert und durch einen Stellmagneten (4), vorzugsweise kontaktlos mittels Magnetkraft, verschiebbar ist,
**dadurch gekennzeichnet, dass**
das Metall- oder Magnetelement (1) ein Metall- oder Magnetstreifen ist, der eine Gleitfläche aufweist, auf welcher das Markierungselement (2) in dem Gehäuse (3, 19) verschiebbar gelagert ist.

2. Gefäß, insbesondere Trinkgefäß, nach Anspruch 1, **dadurch gekennzeichnet, dass** eine Skala (7) an der mindestens einen Gefäßwandung (15), am Metallelement und/ oder am Gehäuse (3, 19) angebracht ist und sich vorzugsweise aus Richtung des Gefäßbodens (10) in Richtung der Gefäßöffnung (11) erstreckt, insbesondere dazu ausgelegt und eingerichtet ist, die konsumierte Gesamttrinkmenge, insbesondere Tagesgesamttrinkmenge, anzuzeigen.

3. Gefäß, insbesondere Trinkgefäß, nach Anspruch 1 oder 2, **dadurch gekennzeichnet, dass**
das Gehäuse (3, 19) durch ein geschlossenes Gehäuse (19) mit einem Innenraum für
das Markierungselement (2) und/oder durch eine Abdeckung (3) mit einem Innenraum für das Markierungselement (2) ausgebildet ist, insbesondere wobei der Innenraum tunnelförmig ist.

4. Gefäß, insbesondere Trinkgefäß, nach Anspruch 3, **dadurch gekennzeichnet, dass**
das Gehäuse (3, 19), vorzugsweise die Abdeckung (3), mindestens eine Gehäusewandung aufweist, welche ein Sichtfenster umfasst und/oder dass das Gehäuse (3, 19), vorzugsweise die Abdeckung (3), zumindest teilweise durchsichtig ist, insbesondere wobei die Abdeckung auf Seitenwänden (14) fixiert ist, die einstückig aus der Gefäßwandung (15) ausgebildet sind.

5. Gefäß, insbesondere Trinkgefäß, nach Anspruch 3 oder 4, **dadurch gekennzeichnet, dass**
das geschlossene Gehäuse (19) oder die Abdeckung (3) einen, insbesondere tunnelförmigen, Innenraum, vorzugsweise auf der Gefäßwandung (15), ausbildet, der sich aus Richtung des Gefäßbodens (10) in Richtung der Gefäßöffnung (11), insbesondere entlang der Außenseite, erstreckt.

6. Gefäß, insbesondere Trinkgefäß, nach einem der vorhergehenden Ansprüche,
**dadurch gekennzeichnet, dass**
das Metall- oder Magnetelement (1) außenseitig auf der Gefäßwandung (15) angeordnet, insbesondere fixiert, ist und das Markierungselement (2) gleitbar auf dem Metall- oder Magnetelement (1) gelagert und von dem Gehäuse (3, 19) überdacht, insbesondere umschlossen, ist.

7. Gefäß nach einem der vorhergehenden Ansprüche in Form eines Trinkgefäßes mit einer Einrichtung zum Einstellen und Anzeigen eines Anzeigewerts, insbesondere einer Gesamttrinkmenge,
die eine Skala (7), das Markierungselement (2), das aus magnetischem Material oder aus einem Magneten besteht, und den Metall- oder Magnetstreifen (1) aufweist, mit dem das Markierungselement (2) durch Magnetkraft verbunden ist,
wobei die Skala (7) insbesondere parallel zum Metall- oder Magnetstreifen (1) verläuft, und das Markierungselement (2) längs des Metall- oder Magnetstreifens (1) verschiebbar ist,
wobei die Einrichtung ferner das Gehäuse (3, 19) aufweist, das einen Innenraum umschließt, in dem sich das Markierungselement (2) und der Metall- oder Magnetstreifen (1) befinden, und dass das Markierungselement (2) durch einen außerhalb des Gehäuses (3, 19) befindlichen Stellmagnet (4) verschiebbar ist,
vorzugweise wobei der Stellmagnet (4) auf das Markierungselement (2) eine größere Magnetkraft ausübt als der Metall- oder Magnetstreifen (1).

8. Gefäß, insbesondere Trinkgefäß, nach einem der vorhergehenden Ansprüche, wobei das Metall- oder Magnetelement ein nicht magnetischer Metallstreifen ist.

9. Trinkmengenüberwachungssystem zum Einstellen und Anzeigen eines Anzeigewerts umfassend ein Gefäß nach einem der Ansprüche 1 bis 8 und ein Stellwerkzeug, insbesondere einen Stellmagneten.

10. Verfahren zum Einstellen und Anzeigen eines Anzeigewertes auf einem Gefäß (6) nach einem der Ansprüche 1 bis 8, wobei das Verfahren die folgenden Schritte in dieser Reihenfolge umfasst:
a. Fixierung des Markierungselements in einer Ausgangsposition in dem Gehäuse mittels einer ersten Magnetkraft, die zwischen Markierungselement und Metall- oder Magnetelement wirkt, insbesondere wobei das Markierungselement einen Magneten umfasst oder darstellt,
b. Lösen des Markierungselements durch Einwirken der zweiten Magnetkraft eines Stellwerkzeugs, vorzugsweise wobei das Stellwerkzeug in Form eines Stellmagneten auf das Gehäuse aufgebracht wird,
c. Transport des Markierungselements innerhalb des Gehäuses durch Verschiebung des Stellwerkzeugs unter Einwirkung der zweiten Magnetkraft, vorzugsweise unter Einwirkung der ersten und zweiten Magnetkraft, von der Ausgangsposition in eine Endposition,
d. Fixierung des Markierungselements in dem Gehäuse in einer Endposition mittels der ersten Magnetkraft, die zwischen Markierungselement und Metall- oder Magnetelement wirkt, unter Entfernung des Stellwerkzeugs, insbesondere so, dass die zweite Magnetkraft nicht mehr auf das Markierungselement einwirkt.

11. Verfahren nach Anspruch 10, **dadurch gekennzeichnet, dass**
die zweite Magnetkraft größer als die erste Magnetkraft ist, insbesondere wobei die erste Magnetkraft auch während des Transportvorgangs in Schritt c. wirkt.

12. Verfahren nach Anspruch 10 oder 11, **dadurch gekennzeichnet, dass**
das Stellwerkzeug in Schritt c. entlang einer Gehäusewand geführt wird, insbesondere in Form eines Sichtfensters und/oder dass das Markierungselement in Schritt c. entlang des Metall- oder Magnetelements transportiert wird, insbesondere so, dass während des Transports ein Kontakt zwischen Markierungselement und Metall- oder Magnetelement besteht.

## Claims

1. A container, particularly beverage container, having a device for configuring and displaying a display value, comprising
at least one container wall (15) with an inner side and an outer side, a container bottom (10) and, particularly opposite thereto, a container opening (11), a metal element or magnetic element (1) and a marking element (2), wherein the metal element or magnetic element (1) comprises magnetic material and/or metallic material and preferably extends along the at least one container wall (15) of the container (6),
wherein the marking element (2) is supported in and/or under a housing (3, 19) and is displaceable by an adjusting magnet (4), preferably contactlessly by means of magnetic force,
**characterized in that**
the metal element or magnetic element (1) is a metal strip or magnetic strip which has a sliding surface on which the marking element (2) is displaceably supported in the housing (3, 19).

2. The container, particularly beverage container, according to Claim 1, **characterized in that**
a scale (7) is arranged on the at least one container wall (15), at the metal element and/or at the housing (3, 19) and preferably extends from direction of the container bottom (10) in direction of the container opening (11), particularly configured and adapted to display the total amount of beverage consumed, particularly the daily total amount of beverage.

3. The container, particularly beverage container, according to Claim 1 or 2,
**characterized in that**
the housing (3, 19) is formed by a closed housing (19) with an interior space for the marking element (2) and/or by a cover (3) with an interior space for the marking element (2), particularly wherein the interior space is tunnel-shaped.

4. The container, particularly beverage container, according to Claim 3, **characterized in that**
the housing (3, 19), preferably the cover (3), has at least one housing wall which comprises an inspection window and/or **in that** the housing (3, 19), preferably the cover (3), is at least partially transparent, particularly wherein the cover is fixed on sidewalls (14) which are formed integrally from the container wall (15).

5. The container, particularly beverage container, according to Claim 3 or 4,
**characterized in that**
the closed housing (19) or the cover (3) forms an interior space, particularly a tunnel-shaped interior space, preferably on the container wall (15), which interior space extends from direction of the container bottom (10) in direction of the container opening (11), particularly along the outer side.

6. The container, particularly beverage container, according to any one of the preceding claims, **characterized in that**
the metal element or magnetic element (1) is arranged on, particularly fixed to, the outer side of the container wall (15), and the marking element (2) is slidably supported on the metal element or magnetic element (1) and is enclosed, particularly surrounded, by the housing (3, 19).

7. The container according to any one of the preceding claims in the form of a beverage container having a device for configuring and displaying a display value, particularly a total beverage amount, which has a scale (7), the marking element (2) consisting of magnetic material or a magnet, and the metal strip or magnetic strip (1) to which the marking element (2) is joined by magnetic force, wherein the scale (7) extends particularly parallel to the metal strip or magnetic strip (1), and the marking element (2) is displaceable along the metal strip or magnetic strip (1),
wherein the device further has the housing (3, 19) which surrounds an interior space in which the marking element (2) and the metal strip or magnetic strip (1) are located, and in that the marking element (2) is displaceable by an adjusting magnet (4) located outside of the housing (3, 19),
preferably wherein the adjusting magnet (4) exerts a greater magnetic force on the marking element (2) than the metal strip or magnetic strip (1).

8. The container, particularly beverage container, according to any one of the preceding claims, wherein
the metal element or magnetic element is a nonmagnetic metal strip.

9. A beverage consumption monitoring system for configuring and displaying a display value, comprising a container according to any one of Claims 1 to 8 and an adjusting tool, particularly an adjusting magnet.

10. A method for configuring and displaying a display value on a container (6) according to any one of Claims 1 to 8, wherein the method comprises the following steps in this order:
a. fixing the marking element in a starting position in the housing by means of a first magnetic force which acts between marking element and metal element or magnetic element, particularly wherein the marking element comprises or is a magnet,
b. disengaging the marking element through action of the second magnetic force of an adjusting tool, preferably wherein the adjusting tool is arranged on the housing in the form of an adjusting magnet,
c. transporting the marking element within the housing by displacing the adjusting tool through action of the second magnetic force, preferably through action of the first magnetic force and second magnetic force, from the starting position into an end position,
d. fixing the marking element in the housing in an end position by means of the first magnetic force which acts between marking element and metal element or magnetic element through action of the adjusting tool, particularly such that the second magnetic force no longer acts on the marking element.

11. The method according to Claim 10, **characterized in that**
the second magnetic force is greater than the first magnetic force, particularly wherein the first magnetic force also acts during the transporting process in step c.

12. The method according to Claim 10 or 11, **characterized in that**
the adjusting tool is guided in step c. along a container wall, particularly in the form of an inspection window, and/or **in that** the marking element is transported in step c. along the metal element or magnetic element, particularly such that there is contact between marking element and metal element or magnetic element during the transporting.

## Revendications

1. Récipient, en particulier récipient à boisson, présentant un dispositif pour le réglage et l'indication d'une valeur d'affichage, comprenant
au moins une paroi de récipient (15) avec une face intérieure et une face extérieure, un fond de récipient (10) et une ouverture de récipient (11), en particulier opposée, ainsi qu'un élément métallique ou magnétique (1) et un élément de marquage (2), l'élément métallique ou magnétique (1) comprenant un matériau magnétique et/ou un matériau métallique, et s'étendant préférentiellement le long de ladite au moins une paroi (15) du récipient (6),
l'élément de marquage (2) étant disposé dans et/ou sous un boîtier (3, 19) et étant déplaçable par un aimant d'actionnement (4), préférentiellement sans contact au moyen d'une force magnétique,
**caractérisé en ce que**
l'élément métallique ou magnétique (1) est une bande métallique ou magnétique qui présente une surface de glissement sur laquelle l'élément de marquage (2) est monté de manière mobile dans le boîtier (3, 19).

2. Récipient, en particulier récipient à boisson selon la revendication 1, **caractérisé en ce qu'**une
graduation (7) est présentée sur ladite au moins une paroi de récipient (15), sur l'élément métallique et/ ou sur le boîtier (3, 19), et s'étend préférentiellement du fond de récipient (10) vers l'ouverture de récipient (11), étant en particulier conçue et réalisée pour indiquer la quantité totale de boisson consommée, en particulier la quantité totale quotidienne de boisson.

3. Récipient, en particulier récipient à boisson selon la revendication 1 ou la revendication 2, **caractérisé en ce que**
le boîtier (3, 19) est réalisé par un boîtier (19) fermé avec un espace intérieur pour l'élément de marquage (2) et/ou par un couvercle (3) avec un espace intérieur pour l'élément de marquage (2), l'espace intérieur étant en particulier en forme de tunnel.

4. Récipient, en particulier récipient à boisson selon la revendication 3, **caractérisé en ce que**
le boîtier (3, 19), préférentiellement le couvercle (3), comporte au moins une paroi de boîtier présentant une fenêtre et/ou **en ce que** le boîtier (3, 19), préférentiellement le couvercle (3), est au moins partiellement transparent, le couvercle étant en particulier fixé sur des parois latérales (14) formées d'un seul tenant avec la paroi de récipient (15).

5. Récipient, en particulier récipient à boisson selon la revendication 3 ou la revendication 4, **caractérisé en ce que**
le boîtier (19) fermé ou le couvercle (3) forment un espace intérieur, en particulier en forme de tunnel, préférentiellement sur la paroi de récipient (15), lequel s'étend du fond de récipient (10) in vers l'ouverture de récipient (11), en particulier le long de la face extérieure.

6. Récipient, en particulier récipient à boisson selon l'une quelconque des revendications précédentes, **caractérisé en ce que**
l'élément métallique ou magnétique (1) est disposé, en particulier fixé sur la face extérieure de la paroi de récipient (15), et l'élément de marquage (2) est disposé de manière coulissante sur l'élément métallique ou magnétique (1) et est recouvert, en particulier entouré, par le boîtier (3, 19).

7. Récipient selon l'une quelconque des revendications précédentes, ayant la forme d'un récipient à boisson présentant un dispositif pour le réglage et l'indication d'une valeur d'affichage, en particulier d'une quantité totale de boisson,
lequel présente une graduation (7), l'élément de marquage (2) en matériau magnétique ou formé par un aimant, et la bande magnétique ou métallique (1), à laquelle l'élément de marquage (2) est accouplé par force magnétique,
la graduation (7) s'étendant en particulier parallèlement à la bande magnétique ou métallique (1), et l'élément de marquage (2) étant mobile le long de la bande magnétique ou métallique (1),
le dispositif comprenant en outre le boîtier (3, 19) entourant un espace intérieur où se trouvent l'élément de marquage (2) et la bande magnétique ou métallique (1), et l'élément de marquage (2) étant déplaçable par un aimant d'actionnement (4) situé en dehors du boîtier (3, 19),
l'aimant d'actionnement (4) exerçant préférentiellement sur l'élément de marquage (2) une force magnétique supérieure à celle de la bande magnétique ou métallique (1).

8. Récipient, en particulier récipient à boisson selon l'une quelconque des revendications précédentes, où l'élément métallique ou magnétique est une bande métallique non magnétique.

9. Système de surveillance d'une consommation de boisson pour le réglage et l'indication d'une valeur d'affichage, comprenant un récipient selon l'une des revendications 1 à 8 et un outil d'actionnement, en particulier un aimant d'actionnement.

10. Procédé de réglage et d'indication d'une valeur d'affichage sur un récipient (6) selon l'une des revendications 1 à 8, ledit procédé comprenant les étapes dans l'ordre ci-dessous :
a. fixation de l'élément de marquage dans une position initiale dans le boîtier au moyen d'une première force magnétique s'exerçant entre l'élément de marquage et l'élément métallique ou magnétique, l'élément de marquage comprenant, ou étant en particulier formé par un aimant,
b. desserrage de l'élément de marquage sous l'effet d'une deuxième force magnétique d'un outil d'actionnement, ledit outil d'actionnement étant préférentiellement appliqué sur le boîtier sous la forme d'un aimant d'actionnement,
c. transport de l'élément de marquage à l'intérieur du boîtier par déplacement de l'outil d'actionnement sous l'effet de la deuxième force magnétique, préférentiellement sous l'effet de la première et de la deuxième forces magnétiques, de la position initiale vers une position finale,
d. fixation de l'élément de marquage dans le boîtier dans une position finale au moyen de la première force magnétique s'exerçant entre l'élément de marquage et l'élément métallique ou magnétique, en retirant l'outil d'actionnement, en particulier de telle manière que la deuxième force magnétique ne s'exerce plus sur l'élément de marquage.

11. Procédé selon la revendication 10, **caractérisé en ce que**
la deuxième force magnétique est supérieure à la première force magnétique, la première force magnétique s'exerçant en particulier également pendant le transport lors de l'étape c.

12. Procédé selon la revendication 10 ou la revendication 11, **caractérisé en ce que** lors de l'étape c., l'outil d'actionnement est guidé le long d'une paroi de boîtier, en particulier sous la forme d'une fenêtre et/ou **en ce que** lors de l'étape c., l'élément de marquage est transporté le long de l'élément métallique ou magnétique, en particulier de telle manière qu'un contact est présenté entre l'élément de marquage et l'élément métallique ou magnétique pendant le transport.
